# EUROPEAN PATENT APPLICATION

(11) **EP 4 682 815 A1**
(43) Date of publication of application: **21.01.2026**
(21) Application number: 24750034.1
(22) Date of filing: 12.03.2024
(51) Int. Cl.: G06T 3/40

(54) **PUZZLE GENERATION METHOD AND APPARATUS, ELECTRONIC DEVICE, AND STORAGE MEDIUM**

(30) Priority: 15.03.2023 CN 202310249452
(71) Applicant: Du, Shun, Taizhou, Jiangsu 225506 (CN)
(72) Inventor: Du, Shun, Taizhou, Jiangsu 225506 (CN)
(74) Representative: Cabinet Chaillot
(86) International application number: PCT/CN2024/081197
(87) International publication number: WO 2024/188238

(57) **Abstract**

This application provides a puzzle generation method and apparatus, an electronic device, and a storage medium, and relates to the technical field of puzzles. A technical solution mainly includes: selecting two images, including a first image and a second image respectively; and generating puzzle component information based on the first image and the second image, where puzzle components are formed by assembling first puzzle pieces for displaying the first image and second puzzle pieces for displaying the second image, and the puzzle component information includes first type information of the puzzle components, first quantity information, and first position information of each type of the puzzle component. The puzzle generation method and apparatus, the electronic device, and the storage medium provided by this application have advantages of improving a puzzle utilization rate, and facilitating a user to perform puzzle assembly.

## Description

### Technical Field

This application relates to the technical field of puzzles, and in particular to a puzzle generation method and apparatus, an electronic device, and a storage medium.

### Background

A puzzle is a toy that is very suitable for intellectual development. For a current common puzzle product, a pattern is preset. The set pattern is then printed on a complete puzzle board, and the puzzle board is cut and divided into a plurality of puzzle pieces. The puzzle pieces are shuffled, and then a user assembles and restores the shuffled puzzle pieces to form the original set pattern.

That is, an image displayed after the conventional puzzle is assembled is usually fixed, indicating that after the puzzle is assembled, there is no meaning of being reassembled, which undoubtedly causes huge waste.

Therefore, some solutions have been set forth in the prior art to solve the problem. For example, the Chinese utility model patent with the publication number CN214913284U discloses a double-sided puzzle apparatus. Specifically, at least two opposite side surfaces of each puzzle piece have different lines. By flipping, rotating, arranging, and combining all the cut puzzle pieces, suitable animal patterns can be formed according to combination forms of these puzzle pieces. Due to the use of double-sided line patterns, the puzzle pieces can be reused to form more puzzle patterns.

The technical solution of assembling the different patterns with one puzzle product is provided in the prior art. However, the number of patterns that can be assembled is still limited, and the assembled patterns are still constrained by the line patterns on the puzzle pieces. The production process requires designing patterns for all the puzzle pieces, resulting in problems of high production and design costs.

Improvements are needed for the above problems.

### Summary

Purposes of this application are to provide a puzzle generation method and apparatus, an electronic device, and a storage medium, which have the advantages of improving a puzzle utilization rate, and facilitating a user to perform puzzle assembly.

In a first aspect, this application provides a puzzle generation method. The technical solution is as below:
the method includes:
selecting two images, including a first image and a second image respectively; and
generating puzzle component information based on the first image and the second image.

Puzzle components are formed by assembling first puzzle pieces for displaying the first image and second puzzle pieces for displaying the second image. The puzzle component information includes first type information of the puzzle components, first quantity information, and first position information of each type of the puzzle component.

Each puzzle component is of a structure formed by assembling and combining the first puzzle pieces and the second puzzle pieces. Each first puzzle piece has a first image display surface, and each second puzzle piece has a second image display surface, where the first image display surface and the second image display surface are typically arranged in a back-to-back manner for respectively displaying the first image and the second image on a front surface and a back surface.

The puzzle component information includes first type information, first quantity information, and first position information.

The first type information refers to combination types of the first puzzle pieces and the second puzzle pieces, namely the types of the puzzle components. Specifically, the first type information may refer to combination types required for a puzzle work, or all combination types.

The first quantity information refers to the quantity corresponding to each combination type of the first puzzle pieces and the second puzzle pieces required for completing the puzzle work.

The first position information refers to a setting position of each type of the puzzle component required for completing the puzzle work, namely, a distribution area of the puzzle work on an installation frame.

By selecting the two images, the puzzle component information is generated based on the two images. That is, by selecting different images, different puzzle component information may be generated. Different patterns may be assembled based on the different puzzle component information. In addition, the user may complete the assembly of the puzzle based on the generated puzzle component information, without the need to imagine to assemble a desired image. Therefore, the solution provided in this application has the beneficial effects of improving the puzzle utilization rate and facilitating the user to assemble the puzzle.

Further, this application further includes:
respectively generating a first pixel map and a second pixel map based on the first image and the second image,
where the first pixel map includes a plurality of first pixel units used to correspond to the first puzzle pieces, each first pixel unit has a single first pattern feature, the second pixel map includes a plurality of second pixel units used to correspond to the second puzzle pieces, and each second pixel unit has a single second pattern feature.

By generating the first pixel map and the second pixel map, the user may first preview a pattern after the puzzle is completed. When the user is not satisfied, the first image and/or the second image may be replaced in time, thereby improving user experience.

Further, in this application, the step of respectively generating a first pixel map and a second pixel map based on the first image and the second image includes:
respectively generating a plurality of first pixel maps and second pixel maps with different preset styles based on the first image and the second image.

The user may have more choices, thereby improving the user experience.

Further, in this application, the step of respectively generating a first pixel map and a second pixel map based on the first image and the second image includes:
respectively generating, based on the first image and the second image, the first pixel map and the second pixel map that numbers of the first pixel units are equal to numbers of the second pixel units.

Further, in this application, the step of respectively generating, based on the first image and the second image, the first pixel map and the second pixel map that numbers of the first pixel units are equal to numbers of the second pixel units includes:
performing first matching processing on the first image and/or the second image, where the first matching processing includes at least one of operations of moving, stretching, scaling, rotating, cropping, and filling; and
respectively generating, based on the first image and/or the second image obtained after the first matching processing, the first pixel map and the second pixel map that the numbers of the first pixel units is equal to the numbers of the second pixel units, where the first pixel map and the second pixel map are the same in size.

Further, in this application, the first type information represents all combination types of the first puzzle pieces and the second puzzle pieces, and the first quantity information represents quantity information corresponding to all the combination types.

Further, in this application, the first type information includes symbol information and/or shape information used to display and distinguish the first puzzle pieces and/or the second puzzle pieces.

Further, in this application, the step of generating puzzle component information based on the first image and the second image includes:
acquiring second type information and second quantity information of the existing puzzle components; and
generating, based on the first image and the second image, the puzzle component information that does not exceed the second type information and the second quantity information.

Further, in this application, the step of generating, based on the first image and the second image, the puzzle component information that does not exceed the second type information and the second quantity information includes:
selecting, by default, a first generation specification corresponding to the second quantity information from a plurality of pieces of preset specification information based on the second type information and the second quantity information; and
generating, based on the first generation specification, the puzzle component information that does not exceed the second type information and the second quantity information.

Further, this application further includes:
acquiring change request information for the first generation specification; and

changing the first generation specification from the specification information based on the change request information.

Further, in this application, the step of acquiring second type information and second quantity information of the existing puzzle components includes:
generating an input interface that at least includes the second type information and the second quantity information to be inputted; and
acquiring the second type information and the second quantity information of the existing puzzle components based on information inputted in the input interface.

Further, in this application, the step of acquiring second type information and second quantity information of the existing puzzle components includes:
acquiring a product identification code that includes the second type information and the second quantity information in advance; and
acquiring the second type information and the second quantity information based on the product identification code.

Further, in this application, the step of acquiring second type information and second quantity information of the existing puzzle components includes:
generating a task instruction; and
acquiring the second type information and the second quantity information of the existing puzzle components after completing the task instruction.

Further, in this application, the step of generating, based on the first image and the second image, the puzzle component information that does not exceed the second type information and the second quantity information includes:
generating a task instruction; and
generating, based on the first image and the second image, the puzzle component information that does not exceed the second type information and the second quantity information after completing the task instruction.

Further, in this application, after the step of generating puzzle component information based on the first image and the second image, the method further includes:
generating an identification code that includes a link used to redirect to an interface with the puzzle component information.

In a second aspect, this application further provides a puzzle generation apparatus, including:
a selection module, configured to select two images, including a first image and a second image respectively; and
a generation module, configured to generate puzzle component information based on the first image and the second image.

Puzzle components are formed by assembling first puzzle pieces for displaying the first image and second puzzle pieces for displaying the second image, and the puzzle component information includes first type information of the puzzle components, first quantity information, and first position information of each type of the puzzle component.

In a third aspect, this application further provides an electronic device, including a processor and a memory. The memory stores computer-readable instructions. The computer-readable instructions, when executed by the processor, run the steps of the above method.

In a fourth aspect, this application further provides a storage medium, having a computer program stored therein. The computer program, when executed by a processor, runs the steps of the above method.

It can be seen from the above that according to the puzzle generation method and apparatus, the electronic device, and the storage medium provided by this application, by selecting the two images, the puzzle component information is generated based on the two images. That is, by selecting different images, different puzzle component information may be generated. Different patterns may be assembled based on the different puzzle component information. In addition, the user may complete the assembly of the puzzle based on the generated puzzle component information, without the need to imagine to assemble a desired image. Therefore, the solution provided in this application has the beneficial effects of improving the puzzle utilization rate and facilitating the user to assemble the puzzle.

### Brief Description of Figures

FIG. 1 is a flowchart of a puzzle generation method according to this application.
FIG. 2 is a schematic structural diagram of a puzzle generation apparatus according to this application.
FIG. 3 is a schematic structural diagram of an electronic device according to this application.
FIG. 4 is a display interface for one of puzzle component information according to this application.
FIG. 5 is a display interface for one of puzzle component information according to this application.
FIG. 6 is a display interface for first position information according to this application.
In the figures: 210-selection module; 220-generation module; 310-processor; and 320-memory.

### Detailed Description

The technical solutions in this application are clearly and completely described in the following with reference to the accompanying drawings in this application. Apparently, the described embodiments are merely some rather than all of the embodiments of this application. The components of this application, which are usually described and shown in the accompanying drawings herein, may be arranged and designed in a variety of configurations. Therefore, the following detailed description of the embodiments of this application provided in the accompanying drawings is not intended to limit the scope of this application claimed for protection, but only represents the selected embodiments of this application. All other embodiments obtained by a person of ordinary skill in the art based on the embodiments of this application without creative efforts shall fall within the scope of protection of this application.

It should be noted that similar numerals and letters denote similar items in the following figures, and therefore, once an item is defined in one figure, the item is not required to be further defined and explained in subsequent figures. In addition, in descriptions of this application, terms such as "first" and "second" are merely used for distinguishing descriptions, and cannot be understood as an indication or implication of relative importance.

Currently, there are many types of puzzles. Puzzle pieces of a conventional puzzle often have a certain part of a set pattern, that is, after the set pattern is laid on a complete board, the board is cut according to a specified number of parts, thereby obtaining puzzle pieces for various parts of the set pattern. Typically, this type of puzzle pieces has a plurality of pattern features, and the pattern features refer to features used to constitute a pattern, such as colors and lines. A few puzzle pieces may have single pattern features. Because one puzzle piece has the plurality of pattern features, there is a small number of puzzle pieces required to constitute the entire set pattern. And because one puzzle piece has the plurality of pattern features, the user may easily imagine or try out a corresponding placement position of each puzzle piece. Therefore, the user may also assemble a complete pattern without specialized guidance instructions for the puzzle, which is suitable for intellectual development of children.

A pixel puzzle is usually composed of a large number of puzzle pieces with single pattern features. In the pixel puzzle, the single pattern feature usually refers to a single color, or may also be other pattern features, such as concave-convex three-dimensional features. Because the puzzle pieces in the pixel puzzle only have single pattern features, a large number of puzzle pieces are required to constitute the entire set pattern, making it difficult for the user to imagine, based on imagination, corresponding positions of all the puzzle pieces according to the single pattern features of the puzzle pieces. Therefore, this type of puzzle usually requires specialized guidance instructions, which record position information of each puzzle piece, thereby allowing the user to assemble the complete pattern by following the guidance instructions. Due to the characteristics of the pixel puzzle, this type of puzzle is usually not used as a toy for intellectual development, but as a craft for display and decoration, or as a gift to give away.

Generally speaking, whether it is the conventional puzzle product or the pixel puzzle product, the user may basically only assemble the set pattern. This is because the puzzle pieces of the conventional puzzle typically have a plurality of pattern features, making the specific pattern assembled only through specific combinations and arrangements; and the puzzle pieces of the pixel puzzle product typically have the single pattern features, and in the case of the limited number of puzzle pieces corresponding to the different pattern features, most of users cannot assemble, based on imagination, patterns beyond the guidance instructions. Therefore, the user may basically only assemble the set pattern using the conventional puzzle product or the pixel puzzle product.

As a result, the problem of a low utilization rate of existing puzzle products is caused. In fact, compared with the conventional puzzle, the pixel puzzle has the characteristic of being able to assemble non-fixed patterns. However, the puzzle pieces of the pixel puzzle have the single pattern features, resulting in a large number of puzzle pieces. In the case of the limited number of puzzle pieces corresponding to the different pattern features, the user cannot assemble the patterns beyond the guidance instructions.

Based on this, this application provides a method for improving a puzzle utilization rate, and more specifically, a solution for improving a utilization rate of a double-sided pixel puzzle. Compared with a single-sided puzzle, the double-sided puzzle is more fun, especially for the pixel puzzle. Typically, the pixel puzzle is composed of a large number of puzzle pieces with the same size and shape. It is difficult for the user to recognize the preset pattern from the scattered puzzle pieces. Only after the user assembles the scattered puzzle pieces by himself or according to the guidance instructions, the user may realize that the assembled puzzle has two patterns, which brings surprises to the user and greatly enhances the fun.

In the prior art, the double-sided pixel puzzle has the problem of high production costs. The applicant has documented technical solutions to solve the problem of the high production costs of the double-sided pixel puzzle in other patent applications. Therefore, it will be possible to produce the double-sided pixel puzzle with low costs. Because the double-sided pixel puzzle is more fun, the double-sided pixel puzzle has broader market prospects. Hence, this application provides a solution to improve the utilization rate of the double-sided pixel puzzle and facilitate assembly for the user.

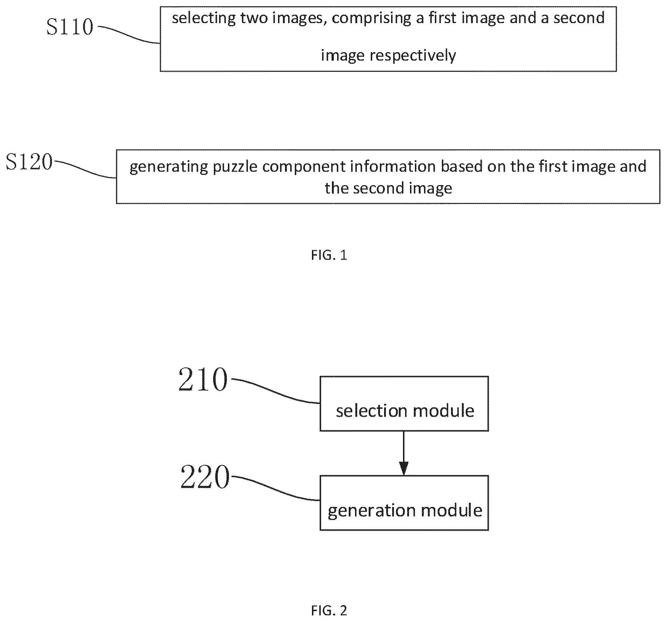

Specifically, referring to FIG. 1, this application provides a puzzle generation method based on a software program. The technical solution specifically includes:
S110: Selecting two images, including a first image and a second image respectively.
S120: Generating puzzle component information based on the first image and the second image.

Puzzle components are formed by assembling first puzzle pieces for displaying the first image and second puzzle pieces for displaying the second image. The puzzle component information includes first type information of the puzzle components, first quantity information, and first position information of each type of the puzzle component.

It should be noted that the method provided by this application is targeted at the double-sided pixel puzzle. And puzzle pieces of the double-sided pixel puzzle include the first puzzle pieces and the second puzzle pieces which may be detachably connected. Each first puzzle piece has a single pattern feature, and the plurality of first puzzle pieces are assembled to display the first image. Each second puzzle piece also has a single pattern feature, and the plurality of second puzzle pieces are assembled to display the second image. The first puzzle pieces and the second puzzle pieces constitute the puzzle component. For a specific structure of the puzzle component, reference may be made to the Chinese utility model patent with the application number 202320143554.1. In this application, the first type information of the puzzle components, the first quantity information, and the first position information of each type of the puzzle component are generated based on the first image and the second image, and the user may first assemble the first puzzle pieces and the second puzzle pieces based on the above information to obtain the puzzle components, and then assembles and places the puzzle components at specified positions to obtain a puzzle with patterns on two sides. In addition, the user may select two different images to generate different puzzle component information, and may assemble, based on the different puzzle component information, the puzzle displaying different patterns. The puzzle component information may instruct the user to complete puzzle assembly.

The first type information of the puzzle components refers combination types of the first puzzle pieces and the second puzzle pieces. The first quantity information refers to the quantity corresponding to each combination type. For example, if the pattern feature on each first puzzle piece is color, there are totally 5 colors of the first puzzle pieces, and therefore there are 5 types of the first puzzle pieces. If the pattern feature on the second puzzle piece is also color, there are totally 5 colors of the second puzzle pieces, and therefore there are 5 types of the second puzzle pieces. The maximum quantity of the combination types between the first puzzle pieces and the second puzzle pieces is 25. Assuming the types of the first puzzle pieces are A, B, C, D, and E, and the types of the second puzzle pieces are a, b, c, d, and e, all the combination types between the first puzzle pieces and the second puzzle pieces are A-a, A-b, A-c, A-d, A-e, B-a, B-b, B-c, B-d, B-e, C-a, C-b, C-c, C-d, C-e, D-a, D-b, D-c, D-d, D-e, E-a, E-b, E-c, E-d, and E-e.

Specifically, the first type information and the first quantity information may be shown in the following table:

| First type information | First quantity information | Sum |
|---|---|---|
| A-a | 100 | |
| A-b | 0 | |
| A-c | 200 | |
| A-d | 0 | |
| A-e | 0 | |
| B-a | 100 | |
| B-b | 100 | |
| B-c | 50 | |
| B-d | 50 | |
| B-e | 0 | |
| C-a | 0 | |
| C-b | 0 | 1000 |
| C-c | 150 | |
| C-d | 0 | |
| C-e | 0 | |
| D-a | 50 | |
| D-b | 0 | |
| D-c | 50 | |
| D-d | 50 | |
| D-e | 0 | |
| E-a | 0 | |
| E-b | 50 | |
| E-c | 50 | |
| E-d | 0 | |
| E-e | 0 | |

The above table shows the first type information and the first quantity information in the puzzle component information generated based on the first image and the second image, where there are totally 12 types of puzzle components needed for assembling the first image and the second image, which are respectively A-a, A-c, B-a, B-b, B-c, B-d, C-c, D-a, D-c, D-d, E-b, and E-c, and the needed quantities are respectively 100, 200, 100, 100, 50, 50, 150, 50, 50, 50, 50, and 50.

It should be noted that the first type information may refer to all combination types of the first puzzle pieces and the second puzzle pieces, and with the above embodiment as an example, 25 types are included. The first type information may also refer to actually-used combination types of the first puzzle pieces and the second puzzle pieces, and with the above embodiment as an example, 12 types are included.

In the solution of this application, the generated puzzle component information includes the first type information of the puzzle components. The puzzle components are formed by assembling the first puzzle pieces and the second puzzle pieces, that is, the first type information refers to the combination types of the first puzzle pieces and the second puzzle pieces. It should be noted that for the double-sided pixel puzzle, puzzle information of the first puzzle pieces and puzzle information of the second puzzle pieces may be respectively generated. The user may first assemble all the first puzzle pieces based on the puzzle information of the first puzzle pieces to obtain a puzzle for displaying the first image, and then assembles all the second puzzle pieces based on the puzzle information of the second puzzle pieces to obtain a puzzle for displaying the second image, that is, the first puzzle pieces and the second puzzle pieces are respectively assembled. However, in the solution set forth in this application, the puzzle information of the first puzzle pieces and the puzzle information of the second puzzle pieces are not generated respectively based on the first image and the second image. Instead, the puzzle component information is generated based on the first image and the second image. The puzzle components are formed by assembling the first puzzle pieces and the second puzzle pieces, that is, the user needs to first assemble the first puzzle pieces and the second puzzle pieces to obtain the puzzle components, and then places the puzzle components at the specified positions based on the first position information. After the user assembles a first side, the double-sided pattern can be obtained, which is suitable for a case that a first user who inputs the two images to generate the puzzle component information, then gifts the puzzle product to another second user, and sends the puzzle component information to the second user, the second user completes the assembly of the puzzle based on the puzzle component information, and before the puzzle is completed, it is difficult for the second user to discover the images that the puzzle intends to display. The puzzle is suitable for gift-giving between friends or couples, and is easy to create a sense of surprise.

The first position information refers to a position where each puzzle component needs to be placed. Specifically, when the entire puzzle is square, a grid-like frame may be set, and grids are filled with various puzzle components. With the above embodiment as an example, specifically, the corresponding grids may be filled with A-a, A-c, B-a, B-b, B-c, B-d, C-c, D-a, D-c, D-d, E-b, and E-c. The letters A, B, C, D, and E are used to represent the types of the first puzzle pieces, and the letters a, b, c, d, and e are used to represent the types of the second puzzle pieces. Additionally, other letters, numbers, or symbols may also be used to replace the first puzzle pieces and the second puzzle pieces.

In some specific implementations, a partitioned table may be generated, with each partition corresponding to a number. Then, the first position information of the puzzle component in each partition is displayed. For example, a 5×5 partitioned table is generated, representing 25 partitions. The 25 partitions may be sequentially numbered as 1-1, 1-2, 1-3, 1-4, 1-5, 2-1, 2-2, 2-3, 2-4, 2-5, 3-1, 3-2, 3-3, 3-4, 3-5, 4-1, 4-2, 4-3, 4-4, 4-5, 5-1, 5-2, 5-3, 5-4, and 5-5 in rows and columns, and then the first position information of the puzzle component in each numbered partition is displayed. Specifically, each partition may be a 10x10 grid-like table, namely, each partition has 100 grids, and each grid is filled with the type of the corresponding puzzle component. Specifically, the first puzzle pieces may be represented by uppercase letters, and the second puzzle pieces are represented by lowercase letters, that is, each grid is filled with one uppercase letter and one lowercase letter, and therefore the first position information of the double-sided puzzle may be displayed within one plane. In addition, by representing the first puzzle pieces and the second puzzle pieces with symbols or numbers, the user cannot realize what a displayed pattern will look like before assembling the puzzle, which is suitable for a case that a first user who inputs the two images to generate the puzzle component information, then gifts the puzzle product to another second user, and sends the puzzle component information to the second user, the second user completes the assembly of the puzzle based on the puzzle component information, and before the puzzle is completed, it is difficult for the second user to discover the images that the puzzle intends to display. The puzzle is suitable for gift-giving between friends or couples, and is easy to create a sense of surprise.

By selecting the two images, the puzzle component information is generated based on the two images. That is, by selecting different images, different puzzle component information may be generated. Different patterns may be assembled based on the different puzzle component information. In addition, the user may complete the assembly of the puzzle based on the generated puzzle component information, without the need to imagine to assemble a desired image. Therefore, the solution provided in this application has the beneficial effects of improving the puzzle utilization rate and facilitating the user to assemble the puzzle.

Through the solution in this application, the user does not need to select a set pattern when purchasing the pixel puzzle product, and only needs to select the type and quantity of puzzle components. Then, by inputting the two images, the puzzle component information is generated based on the first image and the second image, and the assembly is performed based on the puzzle component information to obtain the double-sided pixel puzzle with the first image and the second image.

Further, in some embodiments, the method further includes:
respectively generating a first pixel map and a second pixel map based on the first image and the second image.

The first pixel map includes a plurality of first pixel units used to correspond to the first puzzle pieces, and each first pixel unit has a single first pattern feature. The second pixel map includes a plurality of second pixel units used to correspond to the second puzzle pieces, and each second pixel unit has a single second pattern feature.

By generating the first pixel map and the second pixel map, the user may first preview a pattern after the puzzle is completed. When the user is not satisfied, the first image and/or the second image may be replaced in time, thereby improving user experience.

Further, in some embodiments, the step of respectively generating a first pixel map and a second pixel map based on the first image and the second image includes:
respectively generating a plurality of first pixel maps and second pixel maps with different preset styles based on the first image and the second image.

Typically, in a pixel map, each pixel unit typically only has one color. An outline of a pattern is constructed by pixel units of different colors, thereby displaying the pattern. Assuming one pixel map contains three colors: red, green, and blue respectively, in a default pixel map, the red is distributed in an area X, the green is distributed in an area Y, and the blue is distributed in an area Z. In this case, the colors in various areas may be replaced or the areas corresponding to the various colors may be replaced to obtain pixel maps of different styles.

For example, in the default pixel map, including three colors: red, green, and blue, in the default pixel map, the red is distributed in an area X, the green is distributed in an area Y, and the blue is distributed in an area Z.

In this case, pixel maps of different styles may be obtained by replacing one, or two, or three of the three colors.

Specifically, the red may be replaced with black, the green may be replaced with white, and the blue may be replaced with yellow. In this case, the generated pixel map includes the black, the white, and the yellow, meanwhile, the black is distributed in the area X, the white is distributed in the area Y, and the yellow is distributed in the area Z.

In addition, pixel maps of different styles may be obtained by replacing areas corresponding to the various colors.

Specifically, the red in the area X may be replaced with the green in the area Y, the green in the area Y may be replaced with the blue in the area Z, and the blue in the area Z may be replaced with the red in the area X, that is, the obtained pixel map still includes the red, the green, and the blue. In this case, the red in the pixel map is distributed in the area Z, the green is distributed in the area X, and the blue is distributed in the area Y.

In addition, pixel maps of different styles may also be obtained by replacing one, or two, or three of the three colors, and then replacing the areas corresponding to the various colors.

In addition, pixel maps of different styles may also be obtained by adding new colors.

Respectively generating a plurality of first pixel maps and second pixel maps with different preset styles based on the first image and the second image allows the user to have more choices, thereby improving the user experience.

Further, in some embodiments, the step of respectively generating a first pixel map and a second pixel map based on the first image and the second image includes:
respectively generating, based on the first image and the second image, a first pixel map and a second pixel map that numbers of first pixel units are equal to numbers of second pixel units.

The first pixel units correspond to the first puzzle pieces, and the second pixel units correspond to the second puzzle pieces. Typically, for the puzzle, the puzzle pieces need to be fixed into an installation frame, and therefore a good puzzle can be formed by keeping the total number of the first puzzle pieces equal to the total number of the second puzzle pieces. Correspondingly, the quality of the final puzzle can be ensured by keeping the number of the first pixel units equal to the number of the second pixel units.

Specifically, the step of respectively generating, based on the first image and the second image, a first pixel map and a second pixel map that numbers of first pixel units are equal to numbers of second pixel units includes:
performing first matching processing on the first image and/or the second image, where the first matching processing includes at least one of operations of moving, stretching, scaling, rotating, cropping, and filling; and
respectively generating, based on the first image and/or the second image obtained after the first matching processing, a first pixel map and a second pixel map that the numbers of first pixel units is equal to the numbers of second pixel units, where the first pixel map and the second pixel map are the same in size.

Since the generated puzzle component information corresponds to the first image and the second image, the puzzle component information can be generated after the user inputs the two images. However, the specifications of the two images input by the user may not be completely consistent. According to the first image and the second image, the first pixel map and the second pixel map that the number of first pixel units is equal to the number of second pixel units need to be generated. An aspect ratio of the first pixel map and the second pixel map also needs to be consistent and is kept the same as an aspect ratio of the installation frame. Therefore, the first matching processing needs to be performed on the first image and the second image.

For example, a cropping frame with a preset size may be used to select a cropping scene of the first image and the second image. When the scene of the first image or the second image is larger than the size of the cropping frame, a specific scene within the cropping frame may be selected by shrinking, left and right translation, and up and down translation. Then, a pixel map is generated based on the selected specific scene. When the scene of the first image or the second image is smaller than the size of the cropping frame, the specific scene within the cropping frame may be selected by enlarging, filling, and other ways. Then, a pixel map is generated based on the selected specific scene. In addition, the first image or the second image may also be rotated. For example, by flipping the first image and the second image upside down, two upside-down images may be assembled after the puzzle is completed.

The above operations may be completed automatically or performed by the user.

Further, in some embodiments, the first type information represents all combination types of the first puzzle pieces and the second puzzle pieces, and the first quantity information represents quantity information corresponding to all the combination types.

Some of the above embodiments set forth that the first type information may refer to either all the combination types of the first puzzle pieces and the second puzzle pieces or the actually-used combination types of the first puzzle pieces and the second puzzle pieces. As a preferred implementation, the first type information refers to all the combination types of the first puzzle pieces and the second puzzle pieces, that is, all the combination types of the first puzzle pieces and the second puzzle pieces, as well as the corresponding quantity information are displayed based on the puzzle component information. The purpose of this setting is to potentially increase the likelihood of the user purchasing more first puzzle pieces and second puzzle pieces.

Based on the solution of this application, the user may generate the puzzle component information by inputting the first image and the second image, which means that when purchasing the puzzle product, the user does not need to select the set pattern in a purchase stage, and only needs to purchase different quantities and specifications of first puzzle pieces and second puzzle pieces. If the user purchases a small number of first puzzle pieces and second puzzle pieces, the size of a final assembled puzzle will be smaller, and image details will be worse. If the user purchases a large number of first puzzle pieces and second puzzle pieces, the size of a final assembled puzzle will be larger, and the image details will be better.

In this process, by displaying all the combination types of the first puzzle pieces and the second puzzle pieces, as well as the corresponding quantity information, the user may find that the quantity information corresponding to many combination types indicates 0, as shown in the tables presented in some of the above embodiments. This is because in a pixel map, only a few colors are needed to display the outline of the scene. By displaying all the combination types of the first puzzle pieces and the second puzzle pieces, as well as the corresponding quantity information to the user, the user intuitively realizes that there are still many combination types, and a larger and more detailed puzzle may also be assembled, potentially motivating the user to purchase more quantities of first puzzle pieces and second puzzle pieces.

Further, in some embodiments, the first type information includes symbol information and/or shape information used to display and distinguish the first puzzle pieces and/or the second puzzle pieces.

The symbol information specifically may include numbers, characters, letters, specific symbols, etc.

For example, uppercase letters are used to represent the first puzzle pieces, and lowercase letters are used to represent the second puzzle pieces. For example, different first puzzle pieces may be denoted by A, B, C, D, and E, and different second puzzle pieces may be denoted by a, b, c, d, and e. All combination types of the first puzzle pieces and the second puzzle pieces are denoted by A-a, A-b, A-c, A-d, A-e, B-a, B-b, B-c, B-d, B-e, C-a, C-b, C-c, C-d, C-e, D-a, D-b, D-c, D-d, D-e, E-a, E-b, E-c, E-d, and E-e.

Additionally, shapes of the first puzzle pieces and the second puzzle pieces may also be added near the symbol information of the first puzzle pieces and the second puzzle pieces. For example, the first puzzle pieces are in a convex shape, and the second puzzle pieces are in a concave shape. For example, the convex shape and the concave shape are added near A-a, specifically placing the convex shape on one side of A, and the concave shape on one side of a.

The above setting may allow the user to simply and intuitively distinguish the required first puzzle pieces and second puzzle pieces, as well as puzzle components required to be assembled, which is more beneficial for the user to complete the assembly of the puzzle.

Further, in some embodiments, the step of generating puzzle component information based on the first image and the second image includes:
acquiring second type information and second quantity information of existing puzzle components; and
generating, based on the first image and the second image, the puzzle component information that does not exceed the second type information and the second quantity information.

Based on the solution of this application, the user may generate the puzzle component information by inputting the first image and the second image, which means that when purchasing the puzzle product, the user does not need to select the set pattern in a purchase stage, and only needs to purchase different quantities and specifications of first puzzle pieces and second puzzle pieces. When the puzzle component information is generated based on the first image and the second image, to ensure that the assembly of the puzzle can be normally completed finally, the generated puzzle component information needs to correspond to the first puzzle pieces and the second puzzle pieces purchased by the user.

Specifically, the second type information refers to all types of the first puzzle pieces and the second puzzle pieces. For example, the user purchases 1000 first puzzle pieces and 1000 second puzzle pieces, where the 1000 first puzzle pieces include 300 pieces of A, 200 pieces of B, 200 pieces of C, 150 pieces of D, and 150 pieces of E, the 1000 second puzzle pieces include 200 pieces of a, 200 pieces of b, 300 pieces of c, 200 pieces of d, and 100 pieces of e, and therefore the second type information includes a total of 10 types: A, B, C, D, E, a, b, c, d, and e. The second quantity information is quantity information corresponding to the various types of puzzle pieces.

The puzzle component information includes the first type information and the first quantity information of the puzzle components. The puzzle components are composed of the first puzzle pieces and the second puzzle pieces, that is, the first type information and the first quantity information also reflect type information of the first puzzle pieces and corresponding quantity information, as well as type information of the second puzzle pieces and corresponding quantity information. The generating puzzle component information that does not exceed the second type information and the second quantity information means that in the generated puzzle component information, the types of the first puzzle pieces included cannot exceed the types of the existing first puzzle pieces; in the generated puzzle component information, the quantity corresponding to the types of the first puzzle pieces included should not exceed the quantity of the existing corresponding first puzzle pieces; in the generated puzzle component information, the types of the second puzzle pieces included cannot exceed the types of the existing second puzzle pieces; and in the generated puzzle component information, the quantity corresponding to the types of the second puzzle pieces included should not exceed the quantity of the existing corresponding second puzzle pieces.

Further, in some embodiments, the step of generating, based on the first image and the second image, puzzle component information that does not exceed the second type information and the second quantity information includes:
selecting, by default, a first generation specification corresponding to the second quantity information from a plurality of pieces of preset specification information based on the second type information and the second quantity information; and
generating, based on the first generation specification, the puzzle component information that does not exceed the second type information and the second quantity information.

For ease of description, by default, there are 5 types of the first puzzle pieces and 5 types of the second puzzle pieces purchased by the user, and therefore the puzzle component information is generated with the 5 types of first puzzle pieces and the 5 types of second puzzle pieces by default.

That is, various sizes of specification information may be prepared in advance, such as 10×10, 50×50, 100×100, 200×200, and 500×500. After the second type information and the second quantity information of the existing puzzle components are obtained, the quantity information of the first puzzle pieces and the second puzzle pieces is obtained, which is also the quantity information of the puzzle components. For example, the user purchases 2500 first puzzle pieces and 2500 second puzzle pieces, and therefore the 2500 first puzzle pieces and the 2500 second puzzle pieces may be assembled into 2500 puzzle components. Based on the quantity information, one of the plurality of pieces of preset specification information is selected as the first generation specification by default. As mentioned above, the user purchases the 2500 first puzzle pieces and the 2500 second puzzle pieces, and then 50×50 is selected as the first generation specification by default. That is, the total number of the puzzle components included in the generated puzzle component information is also 2500.

Further, the method further includes:
acquiring change request information for the first generation specification; and
changing the first generation specification from the specification information based on the change request information.

After selecting one of the plurality of pieces of specification information as the first generation specification by default, the user may also change the selection of the first generation specification based on an actual situation. With the above embodiment as an example, after selecting 50×50 as the default first generation specification, the user may also manually select other specification information as the first generation specification, such as selecting 10×10 as the first generation specification. In this case, since the number of the first puzzle pieces and the second puzzle pieces purchased by the user is greater than 10×10, even if generation is performed with 10×10 as the first generation specification, the user can still complete the puzzle normally based on the purchased first puzzle pieces and second puzzle pieces. If the user manually selects 100×100 as the first generation specification, the total number of puzzle components included in the generated puzzle component information will exceed the total number of the puzzle components purchased by the user, and in this case, the user cannot complete the puzzle normally.

Specifically, in some implementations, when the first generation specification manually selected by the user exceeds the number of the puzzle components purchased by the user, an alarm message may be sent. The alarm message may specifically indicate the user that based on the puzzle component information generated by the first generation specification, the puzzle assembly cannot be normally completed.

Specifically, in some implementations, when the user repeatedly selects the first generation specification that exceeds the number of the puzzle components purchased by the user, a secret key may be generated. Through the secret key, purchase information of the user may be queried, and the specific number of the purchased puzzle components may be obtained based on the purchase information.

It should be noted that for ease of description above, by default, there are 5 types of the first puzzle pieces and 5 types of the second puzzle pieces purchased by the user, and therefore the puzzle component information is generated with the 5 types of first puzzle pieces and the 5 types of second puzzle pieces by default. However, in actual use, the user may also purchase different types of first puzzle pieces and second puzzle pieces, such as 3, 4, and 6. Moreover, different types of first puzzle pieces and second puzzle pieces may also be used when the puzzle component information is generated. That is, the specification information and the first generation specification may also include the types of the first puzzle pieces and the second puzzle pieces.

With the above embodiment as an example, after selecting the specification information of 50×50, 50×50 represents the number of puzzle components, meaning that 2500 puzzle components are needed. However, under this selection, the types of the first puzzle pieces and the second puzzle pieces used may also be specifically selected. For example, 3 types of first puzzle pieces and 3 types of second puzzle pieces are selected, or 3 types of first puzzle pieces and 5 types of second puzzle pieces are selected, or 5 types of first puzzle pieces and 5 types of second puzzle pieces are selected. Typically, different types of first puzzle pieces and second puzzle pieces represent different colors. For example, when the 3 types of first puzzle pieces and the 3 types of second puzzle pieces are selected, it means that puzzle component information is generated using the first puzzle pieces of 3 colors and the second puzzle pieces of 3 colors. That is, in some of the above embodiments, the first pixel map and the second pixel map will be generated. The generated first pixel map only has 3 colors, and the generated second pixel map also only has 3 colors. When the 5 types of first puzzle pieces and the 5 types of second puzzle pieces are selected, the generated first pixel map has 5 colors, and the generated second pixel map also has 5 colors.

In some embodiments, the step of acquiring second type information and second quantity information of existing puzzle components includes:
generating an input interface that at least includes second type information and second quantity information to be inputted; and
acquiring the second type information and the second quantity information of the existing puzzle components based on information inputted in the input interface.

That is, when the second type information and the second quantity information of the existing puzzle components are acquired, the user may input the second type information and the second quantity information by himself.

In addition, in some other embodiments, the step of acquiring second type information and second quantity information of existing puzzle components includes:
acquiring a product identification code that includes the second type information and the second quantity information in advance; and
acquiring the second type information and the second quantity information based on the product identification code.

When the puzzle component information needs to be generated, it is necessary to first acquire the second type information and the second quantity information of the existing puzzle components. The second type information and the second quantity information may be acquired through manual input by the user or may also be automatically acquired. The product identification code may be printed on a package or the installation frame of the puzzle product. The product identification code includes the second type information and the second quantity information. By scanning the product identification code, the second type information and the second quantity information are acquired, which has the advantage that the user does not need to remember or query the second type information and the second quantity information.

Specifically, the method of this application may be implemented based on a software program, such as a software installed on a smart phone. After opening the software program, the first image and the second image are inputted. Before generating the puzzle component information, camera permissions of the smart phone may be acquired through invoking, and then a camera is opened to scan the product identification code. The product identification code may be specifically a two-dimensional code. After acquiring the second type information and the second quantity information by scanning the product identification code, the puzzle component information that does not exceed the second type information and the second quantity information is generated based on the first image and the second image.

In addition to adopting the means of automatic acquisition, the way of manual input may also be adopted. In some of the above embodiments, the way for scanning the product identification code is set forth to automatically acquire the second type information and the second quantity information. However, the product identification code may be lost. Additionally, since the puzzle product may be gifted to the other person, it is difficult for a recipient to obtain order information of the product. Therefore, once the product identification code is lost or some puzzle components are lost during use, there may be many inconveniences in subsequent use. Accordingly, this application further provides the way of manual input. The user may perform manual input by counting information about the owned puzzle components, thereby obtaining the second type information and the second quantity information. Therefore, the puzzle component information that does not exceed the second type information and the second quantity information is generated based on the first image and the second image.

Further, in some embodiments, the step of acquiring second type information and second quantity information of existing puzzle components includes:
generating a task instruction; and
acquiring the second type information and the second quantity information of the existing puzzle components after completing the task instruction.

In some of the above embodiments, when the puzzle component information is generated based on the first image and the second image, the second type information and the second quantity information of the existing puzzle components need to be acquired, thereby ensuring the subsequent normal assembly of the puzzle. When the second type information and the second quantity information are acquired, the task instruction may be generated, and the second type information and the second quantity information can be acquired after the user completes the task instruction.

Specifically, with some of the above embodiments as an example, the method of this application may be implemented based on the software program, such as the software program installed on the smart phone. After opening the software program, the first image and the second image are inputted. Before generating the puzzle component information, the camera permissions of the smart phone may be acquired through invoking, and then the camera is opened to scan the product identification code. Before opening the camera to scan the product identification code, the task instruction may be first generated, and after the task instruction is completed, the camera is opened to scan the product identification code, where the task instruction may be specifically a shareable link. Specifically, a link may be generated for redirecting to an advertising promotion page. The task instruction may be sharing the link to a friend circle or other platforms of the specified software. That is, only after the user shares the link to the friend circle, the camera is opened to scan the product identification code. Then, the puzzle component information that does not exceed the second type information and the second quantity information is generated based on the first image and the second image.

Through the above setting, the effect of advertising may be improved, thereby encouraging more people to purchase the puzzle product.

Further, in some embodiments, the step of generating, based on the first image and the second image, puzzle component information that does not exceed the second type information and the second quantity information includes:
generating a task instruction; and
generating, based on the first image and the second image, the puzzle component information that does not exceed the second type information and the second quantity information after completing the task instruction.

Some of the above embodiments record that the task instruction is first generated before acquiring the second type information and the second quantity information, and then the second type information and the second quantity information are acquired after completing the task instruction. The purpose is to improve the effect of advertising, thereby encouraging more people to purchase the puzzle product. In addition, the second type information and the second quantity information may also be first acquired, and after acquiring the second type information and the second quantity information, the task instruction is generated. After the task instruction is completed, the puzzle component information that does not exceed the second type information and the second quantity information is generated based on the first image and the second image.

Specifically, with some of the above embodiments as an example, the method of this application may be implemented based on the software program, such as the software program installed on the smart phone. After opening the software program, the first image and the second image are inputted. Before generating the puzzle component information, the camera permissions of the smart phone may be acquired through invoking, and then the camera is opened to scan the product identification code. After scanning the product identification code, the task instruction is generated. The task instruction may be specifically the shareable link. Specifically, the link may be generated for redirecting to the advertising promotion page. The task instruction may be sharing the link to the friend circle or other platforms of the specified software. That is, after the user shares the link to the friend circle, the puzzle component information that does not exceed the second type information and the second quantity information is generated based on the first image and the second image.

Further, in some embodiments, after the step of generating puzzle component information based on the first image and the second image, the method further includes:
generating an identification code that includes a link used to redirect to an interface with the puzzle component information.

Through the above solution, the identification code is generated after generating the puzzle component information. The identification code may be specifically a two-dimensional code, which may include the puzzle component information or the link. The link is used to redirect to the interface with the puzzle component information. Specifically, the puzzle component information may be presented in a way of a pdf document. The user may perform operations such as downloading, saving, and taking screenshots, thereby completing the assembly of the puzzle based on the first type information, the first quantity information, and the first position information.

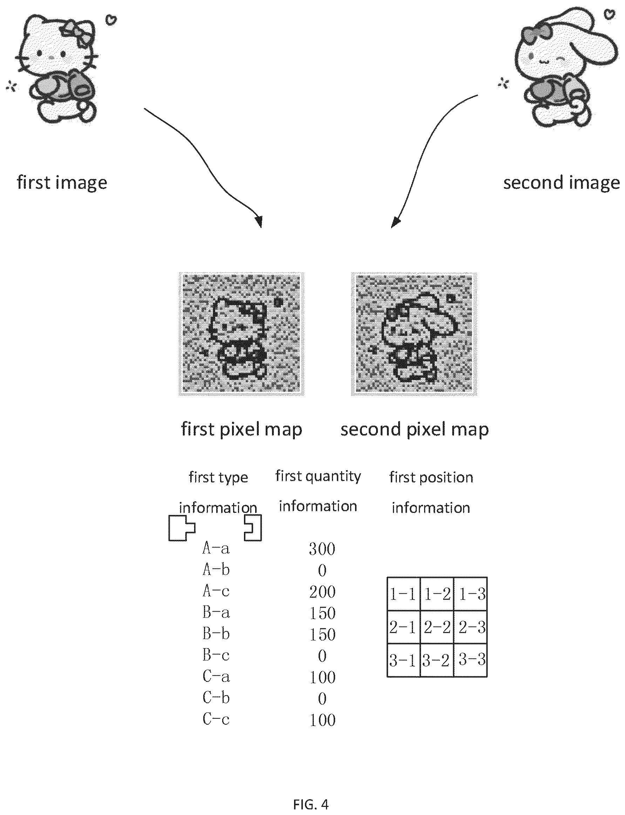

Referring to FIG. 4, FIG. 4 is a display interface for one of puzzle component information. After the first image and the second image are input, the first pixel map and the second pixel map are generated, and the first pixel map and the second pixel map are used by the user for preview, thereby facilitating replacement of the first image and the second image to generate different puzzle display surfaces. The puzzle component information includes the first type information, the first quantity information, and the first position information, where the first type information includes A-a, A-b, A-c, B-a, B-b, B-c, C-a, C-b, and C-c, that is, there are totally 9 combination types for the first puzzle pieces and the second puzzle pieces. The first puzzle pieces are in a convex shape, which are represented by uppercase letters, and specifically have three types: A, B, and C, and the three types of A, B, and C may respectively represent different colors, such as red, yellow, and blue. The second puzzle pieces are in a concave shape, which are represented by lowercase letters, and specifically have three types: a, b, and c, and the three types of a, b, and c may represent different colors, such as black, white, and gray. The first quantity information represents the quantity corresponding to each combination type. The quantity of 0 indicates that there are no puzzle components using this combination. The first position information shows the corresponding positions of the puzzle components. FIG. 4 shows a partitioned table with totally 9 areas, and each area separately shows a position distribution of each puzzle component.

By selecting the two images, the puzzle component information is generated based on the two images. That is, by selecting different images, different puzzle component information may be generated. Different patterns may be assembled based on the different puzzle component information. In addition, the user may complete the assembly of the puzzle based on the generated puzzle component information, without the need to imagine to assemble a desired image. Therefore, the solution provided in this application has the beneficial effects of improving the puzzle utilization rate and facilitating the user to assemble the puzzle.

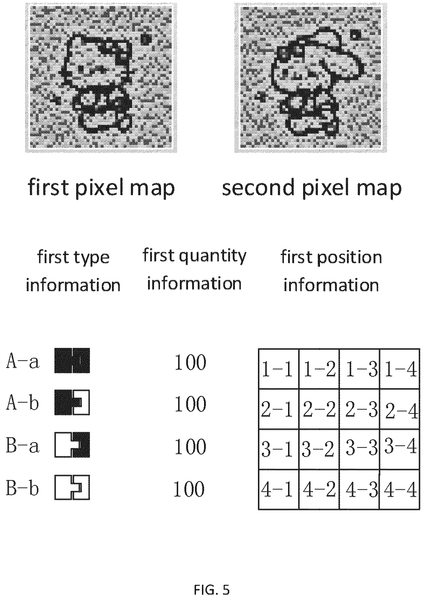

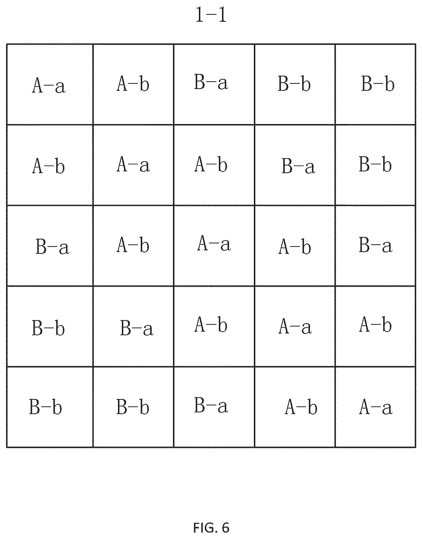

In addition, referring to FIG. 5 and FIG. 6, FIG. 5 and FIG. 6 show display interfaces for another puzzle component information. After the first image and the second image are input, the first pixel map and the second pixel map are generated, and the first pixel map and the second pixel map are used by the user for preview, thereby facilitating replacement of the first image and the second image to generate different puzzle display surfaces. The puzzle component information includes the first type information, the first quantity information, and the first position information, where the first type information includes A-a, A-b, B-a, and B-b, that is, there are totally 4 combination types for the first puzzle pieces and the second puzzle pieces. The first puzzle pieces are in a convex shape, which are represented by uppercase letters, and specifically have two types: A and B, and the two types of A and B may respectively represent different colors, such as black and white. The second puzzle pieces are in a concave shape, which are represented by lowercase letters, and specifically have two types: a and b, and the two types of a and b may represent different colors, such as black and white. In the first type information, each combination includes a schematic shape for the first puzzle pieces and the second puzzle pieces. Additionally, the schematic shape may also be specifically filled with colors, which may be more easily distinguished by the user. The first quantity information represents the quantity corresponding to each combination type, and the first position information shows the corresponding positions of the puzzle components. FIG. 5 shows a partitioned table with totally 16 areas, and each area separately shows a position distribution of each puzzle component. Referring to FIG. 6, FIG. 6 is a schematic diagram of a position distribution of a specific puzzle component numbered 1-1 in the partitioned table in FIG. 5.

The puzzle component information displayed in FIG. 4, FIG. 5, and FIG. 6 is for illustrative purposes only and does not represent the actual puzzle component information for the first image and the second image in the above examples.

In a second aspect, referring to FIG. 2, this application further provides a puzzle generation apparatus, including:
a selection module 210, configured to select two images, including a first image and a second image respectively; and
a generation module 220, configured to generate puzzle component information based on the first image and the second image.

Puzzle components are formed by assembling first puzzle pieces for displaying the first image and second puzzle pieces for displaying the second image. The puzzle component information includes first type information of the puzzle components, first quantity information, and first position information of each type of the puzzle component.

By selecting the two images, the puzzle component information is generated based on the two images. That is, by selecting different images, different puzzle component information may be generated. Different patterns may be assembled based on the different puzzle component information. In addition, the user may complete the assembly of the puzzle based on the generated puzzle component information, without the need to imagine to assemble a desired image. Therefore, the solution provided in this application has the beneficial effects of improving the puzzle utilization rate and facilitating the user to assemble the puzzle.

In some other preferred implementations, the puzzle generation apparatus provided by this application may perform any one of the steps of the above method.

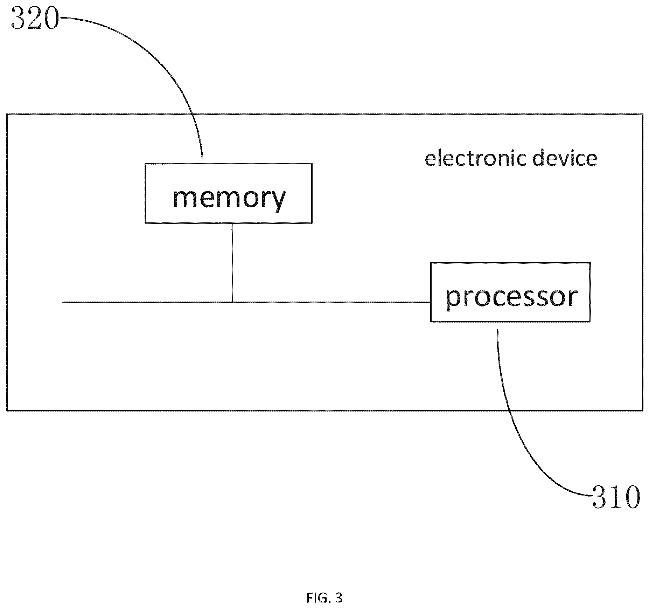

In a third aspect, referring to FIG. 3, this application further provides an electronic device, including a processor 310 and a memory 320. The memory 320 stores computer-readable instructions. The computer-readable instructions, when executed by the processor 310, run the steps of any one of the above methods.

Through the above technical solution, the processor 310 and the memory 320 are interconnected and communicate with each other through a communication bus and/or other forms of connection mechanisms (not shown). The memory 320 stores the computer-readable instructions executable by the processor 310. When the electronic device runs, the processor 310 executes the computer-readable instructions, so as to perform the method in any one of optional implementations of the above embodiments during execution, thereby implementing the following functions: selecting two images, including a first image and a second image respectively; and generating puzzle component information based on the first image and the second image, where puzzle components are formed by assembling first puzzle pieces for displaying the first image and second puzzle pieces for displaying the second image, and the puzzle component information includes first type information of the puzzle components, first quantity information, and first position information of each type of the puzzle component.

In a fourth aspect, this application further provides a computer-readable storage medium, having a computer program stored therein. The computer program, when executed by a processor, performs the steps of any one of the above methods.

Through the above technical solution, the computer program, when executed by the processor, performs the method in any one of optional implementations of the above embodiments, so as to achieve the following functions: selecting two images, including a first image and a second image respectively; and generating puzzle component information based on the first image and the second image, where puzzle components are formed by assembling first puzzle pieces for displaying the first image and second puzzle pieces for displaying the second image, and the puzzle component information includes first type information of the puzzle components, first quantity information, and first position information of each type of the puzzle component.

The computer-readable storage medium may be implemented by any type of volatile or non-volatile storage device or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk or an optical disk.

In the embodiments provided by this application, it should be understood that the disclosed apparatus and method may also be implemented in other ways. The described apparatus embodiment is merely schematic. For example, the unit division is merely a logical function division and may be other division during actual implementation. For example, a plurality of units or components may be combined or integrated into another system, or some features may be ignored or not performed. In addition, the shown or discussed mutual coupling or direct coupling or communication connection is an indirect coupling or communication connection through some interfaces, apparatuses or units, and is in an electrical, mechanical or another form.

The units described as separate components may or may not be physically separated, and components displayed as units may or may not be physical units, and namely may be located in the same place, or may also be distributed to a plurality of network units. The purposes of the solution of this embodiment may be implemented by selecting some or all of the units according to actual needs.

In addition, each functional module in each embodiment of this application may be integrated together to form an independent part, or each module may exist alone, or two or more modules may be integrated to form an independent part.

The foregoing is only a preferred embodiment of this application and is not intended to limit this application, which is subject to various changes and variations for those skilled in the art. Any amendments, equivalent replacements, improvements, etc., made within the spirit and principles of this application shall be included in the scope of protection of this application.

## Claims

1. A puzzle generation method, comprising:
selecting two images, comprising a first image and a second image respectively; and
generating puzzle component information based on the first image and the second image,
wherein puzzle components are formed by assembling first puzzle pieces for displaying the first image and second puzzle pieces for displaying the second image, and the puzzle component information comprises first type information of the puzzle components, first quantity information, and first position information of each type of the puzzle component.

2. The puzzle generation method according to claim 1, further comprising:
respectively generating a first pixel map and a second pixel map based on the first image and the second image,
wherein the first pixel map comprises a plurality of first pixel units used to correspond to the first puzzle pieces, each first pixel unit has a single first pattern feature, the second pixel map comprises a plurality of second pixel units used to correspond to the second puzzle pieces, and each second pixel unit has a single second pattern feature.

3. The puzzle generation method according to claim 2, wherein the step of respectively generating a first pixel map and a second pixel map based on the first image and the second image comprises:
respectively generating a plurality of first pixel maps and second pixel maps with different preset styles based on the first image and the second image.

4. The puzzle generation method according to claim 2, wherein the step of respectively generating a first pixel map and a second pixel map based on the first image and the second image comprises:
respectively generating, based on the first image and the second image, the first pixel map and the second pixel map that numbers of the first pixel units are equal to numbers of the second pixel units.

5. The puzzle generation method according to claim 4, wherein the step of respectively generating, based on the first image and the second image, the first pixel map and the second pixel map that numbers of the first pixel units are equal to numbers of the second pixel units comprises:
performing first matching processing on the first image and/or the second image, wherein the first matching processing comprises at least one of operations of moving, stretching, scaling, rotating, cropping, and filling; and
respectively generating, based on the first image and/or the second image obtained after the first matching processing, the first pixel map and the second pixel map that the numbers of the first pixel units is equal to the numbers of the second pixel units, wherein the first pixel map and the second pixel map are the same in size.

6. The puzzle generation method according to claim 1, wherein the first type information represents all combination types of the first puzzle pieces and the second puzzle pieces, and the first quantity information represents quantity information corresponding to all the combination types.

7. The puzzle generation method according to claim 1, wherein the first type information comprises symbol information and/or shape information used to display and distinguish the first puzzle pieces and/or the second puzzle pieces.

8. The puzzle generation method according to claim 1, wherein the step of generating puzzle component information based on the first image and the second image comprises:
acquiring second type information and second quantity information of the existing puzzle components; and
generating, based on the first image and the second image, the puzzle component information that does not exceed the second type information and the second quantity information.

9. The puzzle generation method according to claim 8, wherein the step of generating, based on the first image and the second image, the puzzle component information that does not exceed the second type information and the second quantity information comprises:
selecting, by default, a first generation specification corresponding to the second quantity information from a plurality of pieces of preset specification information based on the second type information and the second quantity information; and
generating, based on the first generation specification, the puzzle component information that does not exceed the second type information and the second quantity information.

10. The puzzle generation method according to claim 9, further comprising:
acquiring change request information for the first generation specification; and
changing the first generation specification from the specification information based on the change request information.

11. The puzzle generation method according to claim 8, wherein the step of acquiring second type information and second quantity information of the existing puzzle components comprises:
generating an input interface that at least comprises the second type information and the second quantity information to be inputted; and
acquiring the second type information and the second quantity information of the existing puzzle components based on information inputted in the input interface.

12. The puzzle generation method according to claim 8, wherein the step of acquiring second type information and second quantity information of the existing puzzle components comprises:
acquiring a product identification code that comprises the second type information and the second quantity information in advance; and
acquiring the second type information and the second quantity information based on the product identification code.

13. The puzzle generation method according to claim 8, wherein the step of acquiring second type information and second quantity information of the existing puzzle components comprises:
generating a task instruction; and
acquiring the second type information and the second quantity information of the existing puzzle components after completing the task instruction.

14. The puzzle generation method according to claim 8, wherein the step of generating, based on the first image and the second image, the puzzle component information that does not exceed the second type information and the second quantity information comprises:
generating a task instruction; and
generating, based on the first image and the second image, the puzzle component information that does not exceed the second type information and the second quantity information after completing the task instruction.

15. The puzzle generation method according to claim 1, wherein after the step of generating puzzle component information based on the first image and the second image, the method further comprises:
generating an identification code that comprises a link used to redirect to an interface with the puzzle component information.

16. A puzzle generation apparatus, comprising:
a selection module, configured to select two images, comprising a first image and a second image respectively; and
a generation module, configured to generate puzzle component information based on the first image and the second image,
wherein puzzle components are formed by assembling first puzzle pieces for displaying the first image and second puzzle pieces for displaying the second image, and the puzzle component information comprises first type information of the puzzle components, first quantity information, and first position information of each type of the puzzle component.

17. An electronic device, comprising a processor and a memory, wherein the memory stores computer-readable instructions, and the computer-readable instructions, when executed by the processor, run the steps of the method according to any one of claims 1 to 15.

18. A storage medium, having a computer program stored therein, wherein the computer program, when executed by a processor, runs the steps of the method according to any one of claims 1 to 15.
